# EUROPÄISCHE PATENTSCHRIFT

(11) **EP 2 349 628 B1**
(45) Veröffentlichungstag und Bekanntmachung des Hinweises auf die Patenterteilung: **07.04.2021**
(21) Anmeldenummer: 09774811.5
(22) Anmeldetag: 27.11.2009
(51) Int. Cl.: B23K 9/12, B23K 9/173

(54) **VORRICHTUNG UND VERFAHREN ZUR KONTAKTIERUNG EINES SCHWEIßDRAHTES UND KONTAKTSCHALE**
DEVICE AND METHOD FOR CONTACTING A WELDING ROD AND CONTACT SHELL
DISPOSITIF ET PROCÉDÉ POUR LA MISE EN CONTACT D'UNE BAGUETTE DE SOUDURE ET COQUE DE CONTACT

(30) Priorität: 27.11.2008 AT 18522008; 26.11.2009 AT 18802009
(43) Veröffentlichungstag der Anmeldung: 03.08.2011
(73) Patentinhaber: Fronius International GmbH, 4643 Pettenbach (AT)
(72) Erfinder: GROSSAUER, Wolfgang, A-4580 Windischgarsten (AT); HUBINGER, Manfred, A-4550 Kremsmünster (AT); LEONHARTSBERGER, Andreas, A-4490 St. Florian bei Linz (AT)
(74) Vertreter: Sonn & Partner Patentanwälte
(86) Internationale Anmeldenummer: PCT/AT2009/000463
(87) Internationale Veröffentlichungsnummer: WO 2010/060128

(56) Entgegenhaltungen:
- WO-A1-2008/018594
- DE-A1- 3 643 640
- JP-A- 2000 153 360
- US-A1- 2008 035 623
- US-B1- 6 559 416

## Beschreibung

Die Erfindung betrifft ein Kontaktrohr mit zwei Kontaktschalen zur Kontaktierung eines Schweißdrahtes in einem Schweißbrenner nach dem Oberbegriff des unabhängigen Patentanspruchs 1.

Die Erfindung betrifft weiters eine Vorrichtung zur Kontaktierung eines Schweißdrahtes in einem Schweißbrenner mit einem Kontaktrohr mit zwei Kontaktschalen nach den Oberbegriff des Patentanspruchs 13.

Schließlich betrifft die Erfindung ein Verfahren zur Kontaktierung eines Schweißdrahtes in einem Schweißbrenner nach dem Oberbegriff des Anspruchs 21.

Die gegenständliche Erfindung bezieht sich auf die Kontaktierung eines Schweißdrahtes in einem Schweißbrenner mit einer konstanten Kontaktkraft an einer definierten Kontaktstelle. Dadurch resultiert ein konstanter Stromübergang auf den Schweißdraht, sodass eine konstante Schweißqualität gewährleistet werden kann. Zur Erzielung einer konstanten Kontaktkraft müssen die im Folgenden beschriebenen Faktoren berücksichtigt werden. Die wesentlichen Faktoren sind dabei die Toleranz des Durchmessers des Schweißdrahtes, Schmutz und Abrieb. Im Detail heißt das, dass der Durchmesser nicht exakt über die Länge des Schweißdrahtes konstant ist. Ebenso wird durch die Förderung des Schweißdrahtes in der Drahtseele ein Abrieb erzeugt, welcher entsprechend auch bis zu den Kontaktstellen mitbefördert wird. Zusätzlich sammelt sich auch Schmutz auf der Rolle, auf welcher der Schweißdraht aufgewickelt ist, an, welcher ebenso zu den Kontaktstellen befördert wird. Die Rolle bewirkt auch noch eine gewisse Verformung des Schweißdrahtes, die sogenannte Dressur. Auch werden die Kontaktstellen bei der Förderung des Schweißdrahtes ausgeschliffen. Diese Faktoren bewirken eine Variation des Durchmessers des Schweißdrahtes. Somit müssen auch die Kontaktstellen entsprechend variabel sein, um die gewünschte konstante Kontaktkraft gewährleisten zu können.

Die US 6,559,416 B1 offenbart eine Vorrichtung zur Kontaktierung eines Schweißdrahtes in einen Schweißbrenner mit beweglich angeordneten Kontaktschalen. Abgesehen von der relativ aufwändigen Konstruktion der Kontaktiervorrichtung ist die Einstellung der Kontaktkraft aufwändig und bei einer Variation des Durchmessers des Schweißdrahtes und Verschleißerscheinungen keine automatische Einstellung der Kontaktkraft möglich.

Die US 2008/0035623 A1 offenbart ein Kontaktrohr, mit dem keine automatische Nachjustierung bei veränderten Bedingungen, wie z.B. einem Verschleiß oder einem geänderten Durchmesser des Schweißdrahtes, möglich ist.

Aus der WO 2008/018594 A1, der JP 2000 153360 A, der DE 36 43 640 A1 oder der JP 2002059265 A sind Vorrichtungen zur Kontaktierung eines Schweißdrahtes bekannt. Diese üben über eine Feder einen Druck auf einen beweglichen Kontaktteil aus, welcher dadurch gegen einen Konus einer Schutzhülse gepresst wird und die im Kontaktteil angeordnete Öffnung entsprechend an den Schweißdraht angepasst wird und der Schweißdraht mit einer Drahtkontaktkraft kontaktiert ist. Somit wird eine Axialkraft der Feder in eine radial wirkende Kraft auf den Schweißdraht, die Drahtkontaktkraft, umgewandelt.

Nachteilig dabei ist, dass mit derartigen Konstruktionen einer Kontaktiervorrichtung die eingangs beschriebenen Faktoren nicht berücksichtig werden. Wie bereits erwähnt, muss sich der bewegliche Kontaktteil für eine optimale und verschleißarme Kontaktierung während des Schweißprozesses mit einer definierten Drahtkontaktkraft ständig an den Schweißdraht anpassen. Diese Anpassung hat aufgrund einer minimalen Bewegung der Kontaktteile zu erfolgen, welche das Kontaktiersystem ermöglichen muss. Im Stand der Technik ergeben sich dazu allerdings folgende Nachteile.

Jegliche Bewegung der Kontaktteile führt am Konus der Schutzhülse zu unterschiedlich gerichteten Reibkräften, welche durch die Ausprägung der Vorrichtung im Größenordnungsbereich der Federkraft selbst sind, welche die größte Kraft darstellt. Der Grund dafür liegt darin, dass sich die Kontaktteile gegen die Federkraft bewegen müssen, um sich an den Schweißdraht anzupassen. Somit ändern sich die Reibkräfte und es ergibt sich eine tatsächliche Drahtkontaktkraft, welche von der definierten Drahtkontaktkraft stark abweicht und somit kein Optimum mehr darstellt. Das heißt aber auch, dass die Reibkräfte und die Drahtkontaktkräfte voneinander abhängig sind.

Ebenso stellt sich konstruktionsbedingt eine Kontaktkraft zwischen Kontaktteil und Konus ein. Somit bewirkt der Konus sowohl die Kontaktkraft als auch die Drahtkontaktkraft, und somit ist die Drahtkontaktkraft zusätzlich auch von der Kontaktkraft abhängig. Daraus resultiert für die definierte Drahtkontaktkraft eine Kontaktkraft, welche sich im Größenordnungsbereich der Drahtkontaktkraft befindet. Die Kontaktkraft sollte aber deutlich höher sein als die Drahtkontaktkraft, da dort neben dem elektrischen Strom auch die Kontaktwärme an die Schutzhülse übertragen werden sollte, um den Kontaktteil bestmöglich zu kühlen.

Eine Änderung der Drahtförderrichtung, welche bei Spezialprozessen erfolgt, hat ebenfalls einen großen Einfluss auf die entstehenden Drahtkontaktkräfte, da auf derart schnelle Änderungen der Bewegung nicht reagiert werden kann.

Auch ist nachteilig, dass der Kontaktteil konstruktionsbedingt den Schweißdraht stets zentrisch führt. Somit kann dieser in keine Richtung ausweichen. Ebenso wird der Schweißdraht nicht nur durch den Kontaktteil kontaktiert sondern auch geführt. Dies bedingt, dass etwaige Seitenführungskräfte durch Drahtdressuren und Brennerwinkel ebenfalls die Drahtkontaktkräfte beeinflussen, da die Kontaktteile schneller ausgeschliffen werden.

Zusammenfassend kann gesagt werden, dass sich aufgrund der Abhängigkeit der Kräfte bei jedem Einfluss die für die konstante Kontaktierung erforderliche Drahtkontaktkraft ändert.

Auch ist bei jenen Ausführungen im Stand der Technik, bei welchen der Kontaktteil geschraubt ist, nachteilig, dass die Kontaktkraft auf den Schweißdraht nicht automatisch nachjustierbar ist, da der Kontaktteil nicht die erforderliche Flexibilität aufweist.

Die Aufgabe der Erfindung liegt nun darin, eine möglichst konstante und permanente Kontaktierung des Schweißdrahtes über die Standzeit einer Kontaktiervorrichtung eines Schweißbrenners zu schaffen und die Nachteile des Standes der Technik zu vermeiden oder zu reduzieren.

Gelöst wird die Aufgabe durch ein oben genanntes Kontaktrohr, wobei an der Stirnfläche des Haltebereichs jeder Kontaktschale zwei gegenüberliegende Kontaktpunkte zur Kontaktierung mit einer Haltevorrichtung einer die Kontaktschalen umgebenden Hülse und Gewährleistung einer freien Beweglichkeit der Kontaktschalen in der Hülse angeordnet sind, wobei die Verbindung der Kontaktpunkte eine Drehachse im Haltebereich darstellt, um welche die Kontaktschalen beweglich angeordnet sind, an der Stirnfläche des Haltebereichs jeder Kontaktschale eine parallel zur Drehachse angeordnete Erhöhung ausgebildet ist, wobei die Drehachse unterhalb der Erhöhung angeordnet ist, sodass über die Erhöhungen eine axiale Druckkraft aufbringbar ist, zur Erzielung einer Bewegung der Kontaktschalen um die Drehachse und die Umwandlung der axialen Druckkraft in die radiale Kontaktkraft im Kontaktbereich.

Vorteilhafterweise ist der Kontaktbereich jeder Kontaktschale verdreht ausgebildet und weist zu einer Innenfläche in einem Winkel schräg versetzte Flächen zur Kontaktierung des Schweißdrahtes auf. Vorteilhaft ist hierbei, dass durch das Aufliegen des Druckmittels auf der Erhöhung die Kontaktschalen frei beweglich sind und die gewünschte Kontaktkraft auf den Schweißdraht ausüben.

Durch die Maßnahmen der weiteren Unteransprüche ist es von Vorteil, dass sich die Kontaktschalen durch Aufbringen einer Drucckraft auf der Stirnfläche im Austrittsendbereich gegeneinander pressen, sodass der Schweißdraht permanent mit einer definierten Kontaktkraft kontaktiert ist. Ebenso ist die permanente Kontaktierung an derselben Stelle gewährleistet.

Vorteilhafterweise ist bei einer ersten Kontaktschale eine Ausnehmung vom Kontaktbereich zum Haltebereich zur Aufnahme der zweiten Kontaktschale angeordnet, welche seitlich und stirnseitig von Wänden begrenzt ist und sich bis in eine Ebene zur Führung des Schweißdrahtes erstreckt, wobei in der stirnseitig verlaufenden Wand eine Öffnung für den Schweißdraht angeordnet ist und die Breite der zweiten Kontaktschale im Wesentlichen der Breite des Kontaktbereichs der ersten Kontaktschale entspricht und zur Aufnahme in eine Ausnehmung der ersten Kontaktschale ausgebildet ist. Bei einem derartigen Aufbau der Kontaktschalen des Kontaktrohrs ist der resultierende Spalt zur weiteren Kontaktschale nicht wie bei der oben beschriebenen Variante stirnseitig angeordnet und die zusammengebauten Kontaktschalen somit vor Schweißspritzern oder anderer Verschmutzung besser geschützt.

Vorteilhafterweise ist die stirnseitige Wand der ersten Kontaktschale in normaler Förderrichtung des Schweißdrahtes gesehen vor dem Kontaktbereich angeordnet.

Die seitlichen Wände der ersten Kontaktschale sind bevorzugt im Wesentlichen bis vor den Haltebereich angeordnet.

Gemäß einem weiteren Merkmal der Erfindung ist in einer Ebene zur Führung des Schweißdrahtes eine halbkreisförmige Ausnehmung zur Aufnahme eines Führungsrohres angeordnet, wobei im zusammengebauten Zustand dieser Kontaktschale mit der weiteren Kontaktschale diese Ausnehmung der Kontaktschale mit einer Ausnehmung der weiteren Kontaktschale im Wesentlichen eine Bohrung ausbildet.

Gemäß einem weiteren Merkmal der Erfindung ist vorgesehen, dass an der Stirnfläche zumindest zwei gegenüberliegende Vorsprünge angeordnet sind, wobei die Vorsprünge zur Bildung der Drehachse ausgebildet sind, und zwischen den Vorsprüngen die Erhöhung angeordnet ist, wobei die Erhöhung und die Drehachse im Wesentlichen in einer Ebene angeordnet sind.

Gemäß einem weiteren Merkmal der Erfindung ist eine Fläche des Vorsprungs in Richtung der Außenfläche jeder Kontaktschale, insbesondere in Richtung des Kontaktbereichs, verjüngend ausgebildet.

Gelöst wird die Aufgabe auch durch eine oben genannte Kontaktiervorrichtung, bei der an der Stirnfläche jeder Kontaktschale zwei gegenüberliegende Kontaktpunkte zur Kontaktierung mit einer Haltevorrichtung der Hülse und Gewährleistung einer Beweglichkeit der Kontaktschalen in der Hülse angeordnet sind, wobei die Verbindung der Kontaktpunkte eine Drehachse im Haltebereich darstellt, um welche die Kontaktschalen beweglich angeordnet sind, an der Stirnfläche jeder Kontaktschale eine parallel zur Drehachse angeordnete Erhöhung zum Aufbringen einer axialen Drucckraft durch den Druckmechanismus ausgebildet ist, wobei die Drehachse unterhalb der Erhöhung angeordnet ist, und die Hülse eine Haltevorrichtung zur Ausübung einer Gegenkraft auf die Kontaktschalen aufweist, sodass die axiale Druckkraft über die von der Haltevorrichtung auf die Kontaktschalen ausgeübte Gegenkraft in die radial einwirkende Kontaktkraft umwandelbar ist. Somit kann durch die beweglichen Kontaktschalen die Kontaktkraft optimal auf das Material des Schweißdrahtes abgestimmt werden. Dies hat weiters den Vorteil, dass die Förderkraft für den Schweißdraht minimal gehalten werden kann und gleichzeitig ein optimaler und reibungsarmer Stromübergang auf den Schweißdraht erfolgt. Dadurch ist auch der Abrieb des Schweißdrahtes minimal. Ebenso ist der Abrieb der Kontaktschalen minimal bzw. wird dieser durch die Beweglichkeit der Kontaktschalen ausgeglichen, sodass eine permanente Kontaktierung gegeben ist. Somit wird die Lichtbogenstabilität und in weiterer Folge die Schweißqualität erhöht. Auch ist von Vorteil, dass die Kontaktschalen schnell und einfach gewechselt werden können und für unterschiedliche Schweißdrahtdurchmesser, zumindest in einem gewissen Bereich, verwendet werden können.

Dabei sind an jeder Kontaktschale an den Enden der Drehachse zwei Kontaktpunkte zur Kontaktierung mit der Haltevorrichtung der Hülse ausgebildet, durch welche die Kontaktschalen beweglich gehalten sind und von der Hülse eine Gegenkraft auf die Kontaktschalen ausgeübt ist. Dadurch wird ein permanent sicherer Stromübergang auf die Kontaktschalen und eine sichere Wärmeableitung erreicht, ohne die Beweglichkeit der Kontaktschalen einzuschränken.

Durch das Vorsehen einer Einrichtung zur Führung des Schweißdrahtes vor und nach dem Kontaktbereich, sowie die Ausführungsform, gemäß der die Kontaktschalen im Kontaktbereich über die Kontaktkraft im Wesentlichen normal zum Schweißdraht bewegbar sind, wird in vorteilhafter Weise eine optimale Einstellung der Kontaktkraft auf den Schweißdraht erreicht, da Führung und Kontaktierung des Schweißdrahtes getrennt sind. Somit ist ein optimales Schweißergebnis gewährleistet.

Gemäß einem weiteren Merkmal der Erfindung ist die Stirnfläche des Haltebereichs jeder Kontaktschale oval und konvex ausgebildet ist.

Ebenso kann der Haltebereich jeder Kontaktschale gegenüber der weiteren Kontaktschale verbreitert und der Übergang auf die Verbreiterung konisch ausgebildet sein. Durch diese Merkmale ist eine Umlenkung der axialen Druckkraft in die radiale Kontaktkraft möglich und ist diese zusätzlich abstimmbar bzw. einstellbar.

Wenn die Hülse im Wesentlichen eine zu den Kontaktschalen korrespondierende Ausnehmung aufweist, ist gewährleistet, dass die Kontaktschalen durch die Hülse von jeglichen äußeren Einflüssen geschützt sind.

In der Hülse ist vorteilhafterweise eine Isolierbuchse zur Führung des Schweißdrahtes vorgesehen.

Weiters kann im Zentrum des Druckmechanismus und einem Teil der Kontaktschalen ein Führungsrohr für den Schweißdraht angeordnet sein. Durch diese Maßnahmen wird in vorteilhafter Weise erreicht, dass der Schweißdraht problemlos durch den Druckmechanismus und stromlos bis zum Kontaktbereich geführt ist. Ebenso ist dadurch von Vorteil, dass der Schweißdraht ausschließlich im Kontaktbereich der Kontaktschalen permanent kontaktiert wird.

Von Vorteil ist auch, wenn der Druckmechanismus zumindest aus einem Druckbolzen, einer Druckfeder und einer Fixierscheibe gebildet ist, wobei der Druckbolzen im Wesentlichen entlang der Achse des Schweißdrahtes bewegbar ist. Dadurch ist eine Einstellung bzw. Regulierung der Druckkraft möglich, wobei dadurch auch entsprechend die Kontaktkraft einstellbar bzw. regulierbar ist.

Gelöst wird die Aufgabe auch durch ein oben genanntes Verfahren zur Kontaktierung eines Schweißdrahtes in einem Schweißbrenner, bei dem jede Kontaktschale über zwei gegenüberliegende Kontaktpunkte an der Stirnfläche mit einer Hülse kontaktiert wird, und auf eine zu einer die Kontaktpunkte verbindenden Drehachse parallele Erhöhung an der Stirnfläche eines dem Kontaktbereich jeder Kontaktschale gegenüberliegenden Haltebereichs eine Druckkraft in axialer Richtung ausgeübt wird, die Kontaktschalen gegen eine Haltevorrichtung der Hülse zur Erzeugung einer Gegenkraft gedrückt werden, wobei in der Haltevorrichtung die Drucckraft in eine radiale Kontaktkraft umgewandelt wird. Vorteile sind aus den obigen Passagen zu entnehmen.

Die vorliegende Erfindung wird anhand der beigefügten, schematischen Zeichnungen näher erläutert. Darin zeigen:
Fig. 1 eine schematische Darstellung einer Schweißmaschine bzw. eines Schweißgerätes;
Fig. 2 einen Schweißbrenner in schematischer Explosionsdarstellung;
Fig. 3 eine Ausführungsform der erfindungsgemäßen Vorrichtung in schematischer, geschnittener Darstellung, wobei eine Innenfläche einer Kontaktschale gezeigt ist;
Fig. 4 die Hülse der Kontaktiervorrichtung gemäß Fig. 3 in schematischer, geschnittener Darstellung;
Fig. 5 eine schematische Seitenansicht einer Kontaktschale der Kontaktiervorrichtung;
Fig. 6 eine schematische Draufsicht auf die Innenfläche einer Kontaktschale der Kontaktiervorrichtung;
Fig. 7 eine schematische Ansicht eines Kontaktbereichs zweier kombinierter Kontaktschalen;
Fig. 8 eine schematische Draufsicht einer Stirnfläche eines Haltebereichs zweier kombinierter Kontaktschalen;
Fig. 9 eine schematische Detaildarstellung zweier Kontaktschalen und eines Druckbolzens mit den wirkenden Kräften;
Fig. 10 die erfindungsgemäße Vorrichtung in schematischer, geschnittener Darstellung, wobei eine Seitenansicht einer Kontaktschale gezeigt ist; und
Fig. 11 bis 16 verschiedene Ansichten einer weiteren Ausführungsform einer Kontaktiervorrichtung mit unterschiedlich aufgebauten Kontaktschalen.

Einführend wird festgehalten, dass gleiche Teile der Varianten und Ausführungsformen mit gleichen Bezugszeichen versehen werden.

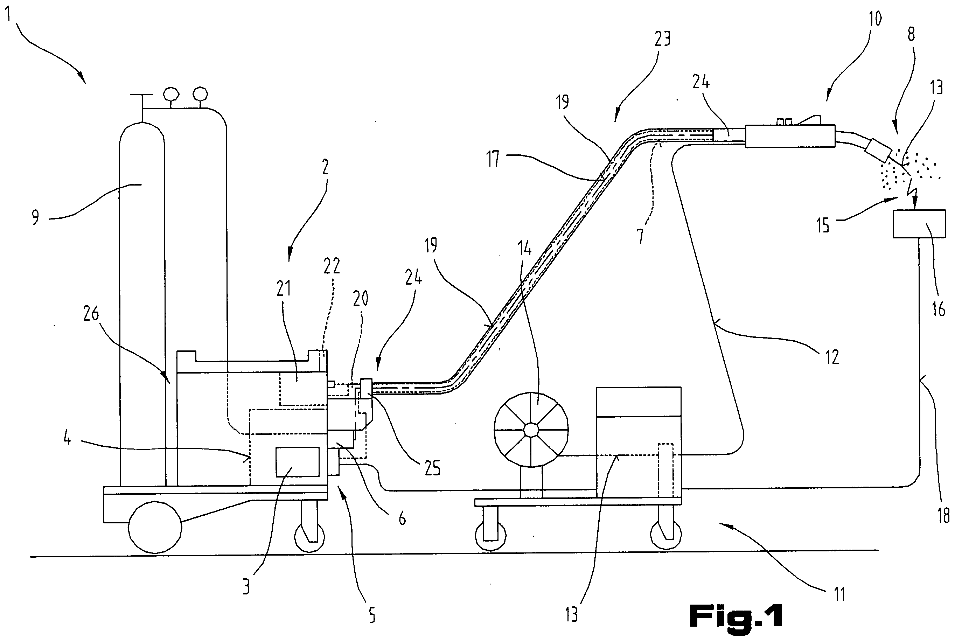

In Fig. 1 ist ein Schweißgerät 1 bzw. eine Schweißanlage für verschiedenste Prozesse bzw. Verfahren, wie z.B. MIG/MAG-Schweißen bzw. WIG/TIG-Schweißen oder Elektroden-Schweißverfahren, Doppeldraht/Tandem-Schweißverfahren, Plasma- oder Lötverfahren usw., gezeigt.

Das Schweißgerät 1 umfasst eine Stromquelle 2 mit einem Leistungsteil 3, einer Steuervorrichtung 4 und einem dem Leistungsteil 3 bzw. der Steuervorrichtung 4 zugeordneten Umschaltglied 5. Das Umschaltglied 5 bzw. die Steuervorrichtung 4 ist mit einem Steuerventil 6 verbunden, welches in einer Versorgungsleitung 7 für ein Gas 8, insbesondere ein Schutzgas, wie beispielsweise CO₂, Helium oder Argon und dergl., zwischen einem Gasspeicher 9 und einem Schweißbrenner 10 bzw. einem Brenner angeordnet ist.

Zudem kann über die Steuervorrichtung 4 noch ein Drahtvorschubgerät 11, welches für das MIG/MAG-Schweißen üblich ist, angesteuert werden, wobei über eine Versorgungsleitung 12 ein Zusatzwerkstoff bzw. ein Schweißdraht 13 von einer Vorratstrommel 14 bzw. einer Drahtrolle in den Bereich des Schweißbrenners 10 zugeführt wird. Selbstverständlich ist es möglich, dass das Drahtvorschubgerät 11, wie es aus dem Stand der Technik bekannt ist, im Schweißgerät 1, insbesondere im Grundgehäuse, integriert ist und nicht, wie in Fig. 1 dargestellt, als Zusatzgerät ausgebildet ist.

Es ist auch möglich, dass das Drahtvorschubgerät 11 den Schweißdraht 13 bzw. den Zusatzwerkstoff außerhalb des Schweißbrenners 10 an die Prozessstelle zuführt, wobei hierzu im Schweißbrenner 10 bevorzugt eine nicht abschmelzende Elektrode angeordnet ist, wie dies beim WIG/TIG-Schweißen üblich ist.

Der Strom zum Aufbauen eines Lichtbogens 15, insbesondere eines Arbeitslichtbogens, zwischen der nicht abschmelzenden Elektrode, nicht dargestellt, und einem Werkstück 16 wird über eine Schweißleitung 17 vom Leistungsteil 3 der Stromquelle 2 dem Schweißbrenner 10, insbesondere der Elektrode, zugeführt, wobei das zu verschweißende Werkstück 16, welches aus mehreren Teilen gebildet ist, über eine weitere Schweißleitung 18 ebenfalls mit dem Schweißgerät 1, insbesondere mit der Stromquelle 2, verbunden ist und somit über den Lichtbogen 15 bzw. den gebildeten Plasmastrahl für einen Prozess ein Stromkreis aufgebaut werden kann.

Zum Kühlen des Schweißbrenners 10 kann über einen Kühlkreislauf 19 der Schweißbrenner 10 unter Zwischenschaltung eines Strömungswächters 20 mit einem Flüssigkeitsbehälter, insbesondere einem Wasserbehälter 21, verbunden werden, wodurch bei der Inbetriebnahme des Schweißbrenners 10 der Kühlkreislauf 19, insbesondere eine für die im Wasserbehälter 21 angeordnete Flüssigkeit verwendete Flüssigkeitspumpe, gestartet wird und somit eine Kühlung des Schweißbrenners 10 bewirkt werden kann.

Das Schweißgerät 1 weist weiters eine Ein- und/oder Ausgabevorrichtung 22 auf, über die die unterschiedlichsten Schweißparameter, Betriebsarten oder Schweißprogramme des Schweißgerätes 1 eingestellt bzw. aufgerufen werden können. Dabei werden die über die Ein- und/oder Ausgabevorrichtung 22 eingestellten Schweißparameter, Betriebsarten oder Schweißprogramme an die Steuervorrichtung 4 weitergeleitet und von dieser werden anschließend die einzelnen Komponenten der Schweißanlage bzw. des Schweißgerätes 1 angesteuert bzw. entsprechende Sollwerte für die Regelung oder Steuerung vorgegeben.

Weiters ist in dem dargestellten Ausführungsbeispiel der Schweißbrenner 10 über ein Schlauchpaket 23 mit dem Schweißgerät 1 bzw. der Schweißanlage verbunden. In dem Schlauchpaket 23 sind die einzelnen Leitungen vom Schweißgerät 1 zum Schweißbrenner 10 angeordnet. Das Schlauchpaket 23 wird über eine Kupplungsvorrichtung 24 mit dem Schweißbrenner 10 verbunden, wogegen die einzelnen Leitungen im Schlauchpaket 23 mit den einzelnen Kontakten des Schweißgerätes 1 über Anschlussbuchsen bzw. Steckverbindungen verbunden sind. Damit eine entsprechende Zugentlastung des Schlauchpaketes 23 gewährleistet ist, ist das Schlauchpaket 23 über eine Zugentlastungsvorrichtung 25 mit einem Gehäuse 26, insbesondere mit dem Grundgehäuse des Schweißgerätes 1, verbunden. Selbstverständlich ist es möglich, dass die Kupplungsvorrichtung 24 auch für die Verbindung am Schweißgerät 1 eingesetzt werden kann.

Grundsätzlich ist zu erwähnen, dass für die unterschiedlichen

Schweißverfahren bzw. Schweißgeräte 1, wie beispielsweise WIG-Geräte oder MIG/MAG-Geräte oder Plasmageräte, nicht alle zuvor benannten Komponenten verwendet bzw. eingesetzt werden müssen. Hierzu ist es beispielsweise möglich, dass der Schweißbrenner 10 als luftgekühlter Schweißbrenner 10 ausgeführt werden kann.

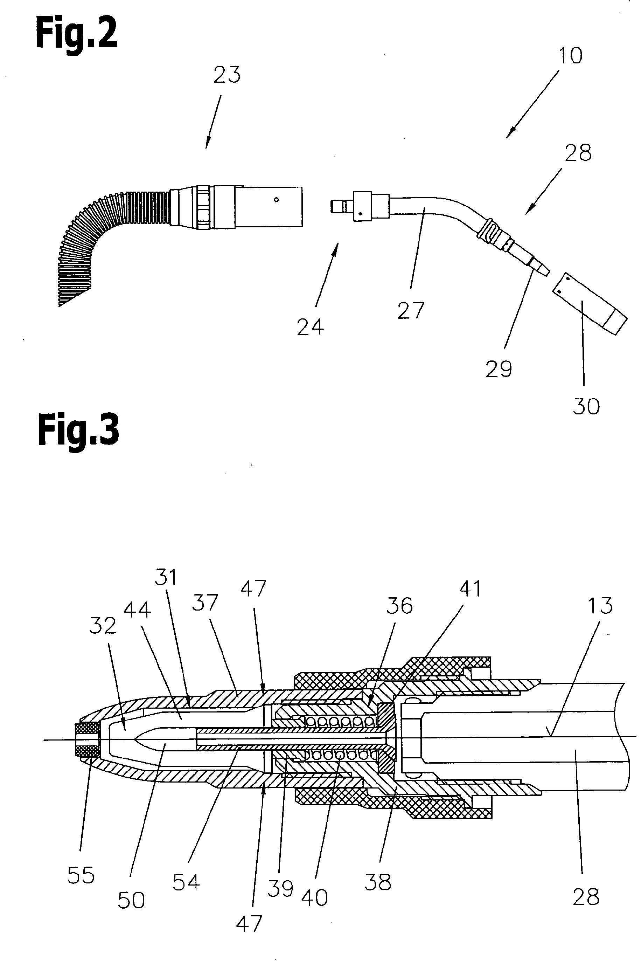

In Fig. 2 ist ein stark vereinfachter Aufbau eines Schweißbrenners 10 (handelsüblicher MIG-Brenner) dargestellt. Diese Explosionsdarstellung zeigt die wesentlichen Komponenten des Schweißbrenners 10, nämlich das Schlauchpaket 23, die Kupplungsvorrichtung 24, einen Rohrbogen 27, einen Brennerkörper 28 als stromführenden Teil, an welchem schlussendlich ein Kontaktrohr 29 befestigt ist, und eine Gasdüse 30. Das Schlauchpaket 23 wird über die Kupplungsvorrichtung 24 mit dem Rohrbogen 27 verbunden.

Das Schlauchpaket 23 kann auch an einem Brennergriff angeschlossen und der Brennergriff über die Kupplungsvorrichtung 24 mit dem Rohrbogen 27 verbunden werden. Dabei kann zum Verbinden des Schlauchpaketes 23 mit dem Brennergriff ebenfalls eine derartige Kupplungsvorrichtung 24 eingesetzt werden. Der Brennergriff kann jedoch auch als Zwischenstück ausgebildet sein und eine Befestigung des Schweißbrenners 10 über das Zwischenstück an einem Roboter vorgenommen werden.

Der Rohrbogen 27 beinhaltet unter anderem Kühlkanäle, Versorgungsleitungen für die elektrische Energie, Versorgungsleitungen für das Gas 8 und insbesondere die Versorgungsleitung bzw. Zuführvorrichtung 12 für den Schweißdraht 13, die sogenannte Seele bzw. Drahtseele, wobei dieser dem Rohrbogen 27 über das Schlauchpaket 23 zugeführt wird. Der Schweißdraht 13 wird durch das Drahtvorschubgerät von der Vorratstrommel 14 über die Zuführvorrichtung 12 bzw. über eine entsprechende Innenbohrung in der Zuführvorrichtung 12 bis zum Kontaktrohr 29 gefördert. Im Kontaktrohr 29 wird der Schweißdraht 13 mit elektrischer Energie versorgt, sodass ein Lichtbogen-Schweißprozess durchgeführt werden kann. Demzufolge ist das Kontaktrohr 29 aus einem elektrisch leitfähigen und im Wesentlichen verschleißfesten Material, wie beispielsweise Kupfer, Kupferlegierungen (Wolfram), usw., gefertigt.

Wie aus dem Stand der Technik bekannt, kann das Kontaktrohr 29 auch aus zumindest zwei Kontaktschalen 31 gebildet sein, wobei die Funktion der Kontaktierung entsprechend erhalten bleibt. Für einen stabilen Schweißprozess ist bei der Kontaktierung von Bedeutung, dass der Schweißdraht 13 möglichst permanent in einem Kontaktbereich 32 kontaktiert wird. Dieser Kontaktbereich 32 befindet sich im Wesentlichen an jenem Ende der Kontaktschalen 31, an welchem der Schweißdraht 13 aus den Kontaktschalen 31 austritt.

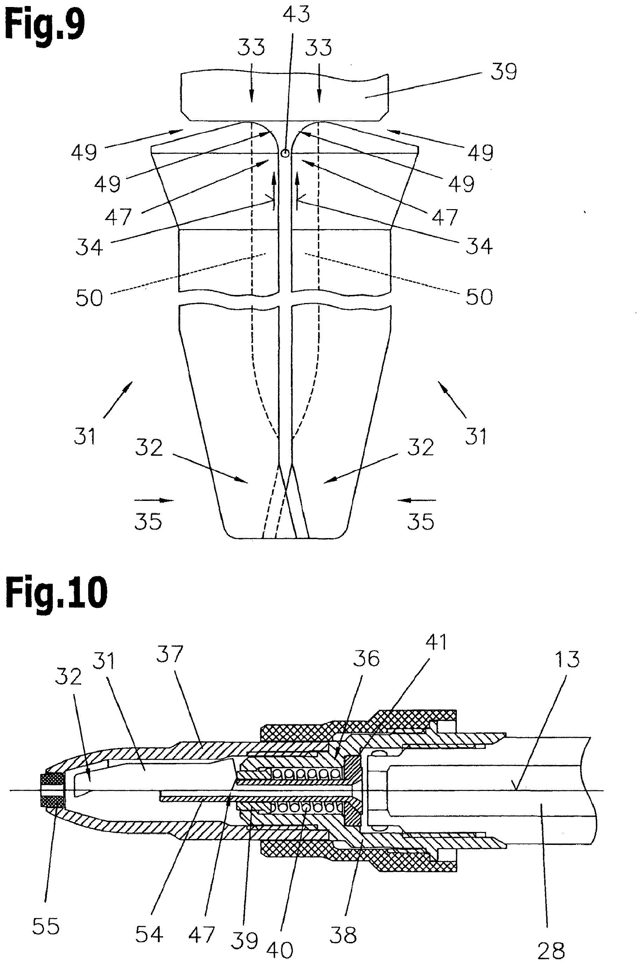

Erfindungsgemäß wird die für einen stabilen Schweißprozess erforderliche Kontaktierung derart gelöst, dass auf die Kontaktschalen 31 eine Druckkraft 33 einwirkt, wobei mit einer gegen die Druckkraft 33 wirkenden Gegenkraft 34 im Kontaktbereich 32 eine definierte Kontaktkraft 35 erzeugt wird, d.h., dass auf die Kontaktschalen 31 die axiale Druckkraft 33 einwirkt, worauf über die Gegenkraft 34 eine Umlenkung der Druckkraft 33 in die radial einwirkende Kontaktkraft 35 zum Zusammendrücken der Kontaktschalen 31 umgewandelt wird und somit eine stabile und sichere Kontaktierung im Kontaktbereich 32 der Kontaktschalen 31 erzielt wird (siehe Fig. 9). Dadurch ist der Schweißdraht 13 permanent im Kontaktbereich 32 kontaktiert.

Zur Erzeugung dieser Kräfte auf die Kontaktschalen 31 sind ein Druckmechanismus 36 und eine Hülse 37 vorgesehen. Dabei ist der Druckmechanismus 36 im Zentrum eines am Brennerkörper 28 lösbar befestigten Düsenstocks 38 integriert. Der Druckmechanismus 36 wird aus einem Druckbolzen 39, einer Druckfeder 40 und einer Fixierscheibe 41 gebildet. Die Druckfeder 40 wird mit der Fixierscheibe 41 gespannt, sodass der beweglich gelagerte Druckbolzen 39 die Druckkraft 33 auf die Kontaktschalen 31 ausüben kann. Diese wird allerdings erst ausgeübt, wenn die Hülse 37, in welcher die Kontaktschalen 31 frei beweglich angeordnet sind, am Düsenstock 38 lösbar befestigt wird. Durch die Befestigung der Hülse 37 wird der Druckbolzen 39 durch die Kontaktschalen 31 in Richtung der Fixierscheibe 41 zurückgeschoben, sodass die Drucckraft 33 ausgeübt wird. Entsprechend der verwendeten Druckfeder 40 wird eine unterschiedliche Druckkraft 33 erzeugt. Durch die Druckkraft 33 werden die Kontaktschalen 31 gegen eine Haltevorrichtung 42 in der Hülse 37 gedrückt, woraus entsprechend die Gegenkraft 34 resultiert. Dabei wirkt die Gegenkraft 34 im Wesentlichen an den Enden einer Drehachse 43 der Kontaktschalen 31. Die Druckkraft 33 wird im Wesentlichen parallel bzw. neben der Drehachse 43 über die Druckpunkte 53 im Wesentlichen in Richtung des Kontaktbereichs 32 auf jede Kontaktschale 31 ausgeübt. Aufgrund des Anpressens der Drehachse 43 der Kontaktschalen 31 an die Haltevorrichtung 42 wird eine Umlenkung der einwirkenden axialen Druckkraft 33 in die radiale Kontaktkraft 35 erzielt. Dadurch resultiert die definierte Kontaktkraft 35 im Kontaktbereich 32.

Bevorzugt weist der Druckmechanismus 36 im Zentrum eine Durchführung auf, über die der Schweißdraht 13 hindurchgefördert wird. Es ist aber auch möglich, dass ein Druckmechanismus oder mehrere Druckmachanismen um die Durchführung für den Schweißdraht 13 angeordnet werden.

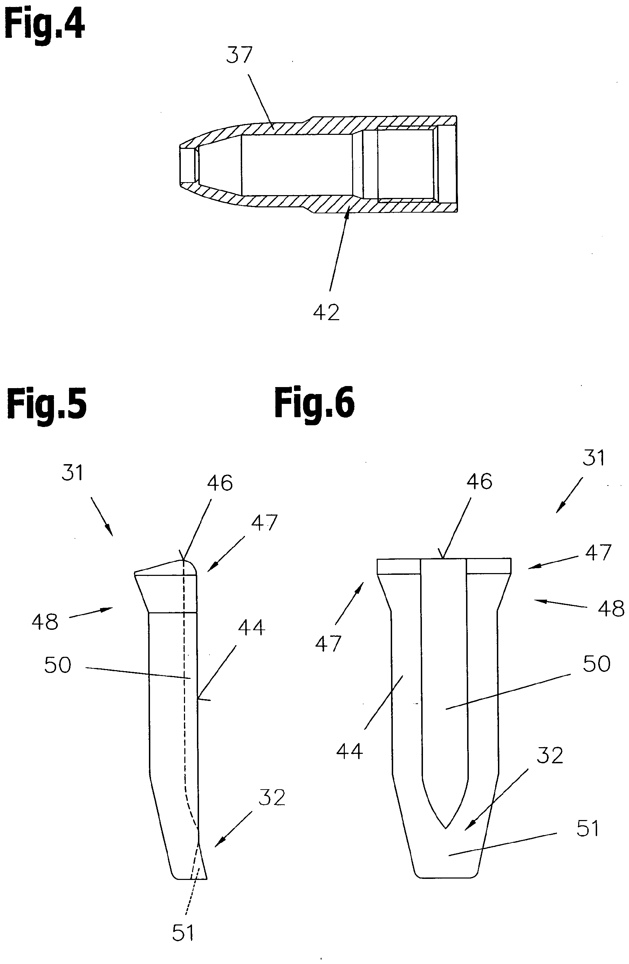

Im Detail ist die erfindungsgemäße Kontaktiervorrichtung in den Fig. 3 bis 10 dargestellt. Die Druckkraft 33, Gegenkraft 34 und Kontaktkraft 35 ist jeweils mit Pfeilen angedeutet. Der im Düsenstock 38 integrierte Druckmechanismus 36 wird von der Seite des Brennerkörpers 28 in den Düsenstock 38 eingebaut. Der Druckbolzen 39 ist durch die Federkraft der Druckfeder 40 entlang des Verlaufs des Schweißdrahtes 13 beweglich. Die Fixierscheibe 41 behält stets ihre Position bei. Der Düsenstock 38 ist im Inneren entsprechend geformt, sodass die zum Düsenstock 38 entsprechend korrespondierend ausgebildeten Komponenten des Druckmechanismus 36 die beschriebene Funktion ausführen können. Beispielsweise kann die Fixierscheibe 41 in den Düsenstock 38 bis zu einem Anschlag eingeschraubt sein oder in diesen eingepresst sein. Mit der Fixierscheibe 41 wird auch die Federkraft der Druckfeder 40 eingestellt. Der Düsenstock 38 mit dem Druckmechanismus 36 kann als Ersatzteil bzw. Verschleißteil angesehen werden.

Wesentlich für die erfindungsgemäße Kontaktiervorrichtung ist auch die Konstruktion der Kontaktschalen 31, welche vorzugsweise identisch aufgebaut sind und somit einfach gefertigt werden können. Dabei resultiert aus der Kombination zumindest zweier Kontaktschalen 31 im Wesentlichen ein aus dem Stand der Technik bekanntes Kontaktrohr 29. Die Kombination erfolgt im Wesentlichen derart, dass jeweils die Innenflächen 44 der Kontaktschalen 31 den Schweißdraht 13 umschließen. Zur erfindungsgemäßen Übertragung der Kontaktkraft 35 auf den Schweißdraht 13 müssen die Kontaktschalen 31 beweglich sein, um die eingangs angesprochenen Forderungen erfüllen zu können.

Dies wird durch einen Haltebereich 48 der Kontaktschalen 31 erreicht. Dieser weist eine speziell geformte Stirnfläche 45 auf, welche mit dem Druckbolzen 39 in Verbindung steht und die Umwandlung der axialen Druckkraft 33 in die radiale Kontaktkraft 35 ermöglicht. Dazu ist zum einen die Grundfläche der Stirnfläche 45 einer Kontaktschale 31 kein Kreis, sondern im Wesentlichen ein Kreissegment. Dabei ergeben sich an den Enden der Kreissehne des Kreissegments zwei Kontaktpunkte 47, welche die geforderte Beweglichkeit der Kontaktschale 31 gewährleisten. Zum zweiten ist die Stirnfläche 45 mit einer Erhöhung 46 versehen. Diese Erhöhung 46 bewirkt, dass bei Befestigung der Hülse 37 der Druckbolzen 39 von einem Anschlag im Düsenstock 38 nach hinten geschoben wird und letztendlich die Kontaktkraft 35 auf den Schweißdraht 13 wirkt. Dabei wurden die Kontaktschalen 31 im Wesentlichen in der Hülse 37 so angeordnet bzw. eingelegt, dass diese durch den Haltebereich 48 von der Haltevorrichtung 42 gehalten sind. Die Kontaktschalen 31 sind mit der Hülse 37 fixiert und weisen keine eigenen Befestigungselemente auf. Der Haltebereich 48 der Kontaktschalen 31 befindet sich gegenüber dem Kontaktbereich 32, also an jenem Ende der Kontaktschalen 31, an welchem der Schweißdraht 13 eintritt (bei einer Förderung des Schweißdrahtes 13 in Richtung des Werkstücks 16). Der Haltebereich 48 ist gegenüber der übrigen Kontaktschale 31 verbreitert ausgebildet, wobei der Übergang auf die Verbreiterung konisch ausgebildet ist. Die Stirnfläche 45 und die Erhöhung 46 sind Teile des Haltebereichs 48. Die Erhöhung 46 teilt die Stirnfläche 45 quasi in zwei getrennte Abschnitte, die ausgehend von der Erhöhung 46 schräg abfallend ausgebildet sind. Dadurch werden Freiräume 49 zwischen der Stirnfläche 45 und dem Druckbolzen 39 gebildet, welche für die Beweglichkeit der Kontaktschalen 31 ausschlaggebend sind.

Bevorzugt ist die Erhöhung 46 parallel zur Kreissehne des Kreissegments der Stirnfläche 45 angeordnet, wobei der Abschnitt zur Innenfläche 44 wesentlich kleiner ist als der weitere Abschnitt. Die Schräge von der Erhöhung 46 zur Innenfläche 44 ist bevorzugt kreisförmig durch einen Radius gebildet. Ebenso weist die Innenfläche 44 eine Ausnehmung 50 auf, in welcher der Schweißdraht 13 im Wesentlichen freilaufend bewegbar ist. Die Ausnehmung 50 erstreckt sich dabei im Wesentlichen bis zum Kontaktbereich 32. Des Weiteren ist der Kontaktbereich 32 bevorzugt auch verdreht ausgebildet, wobei eine Fläche 51 des Kontaktbereichs 32 mit einem definierten Winkel versetzt zur Innenfläche 44 angeordnet ist. Damit bewirken die Kontaktschalen 31 eine zusätzliche seitliche Führung des Schweißdrahtes 13.

Bei Kombination zweier Kontaktschalen 31 und Anordnung in der Hülse 37 wird eine Drehachse 43 gebildet, um welche die Kontaktschalen 31 bewegt werden können. Die Drehachse stellt im Wesentlichen die Verbindung zwischen den Kontaktpunkten 47 dar, wobei diese Verbindung auch im Wesentlichen der Kreissehne der Kreissegmente der Stirnfläche 45 im Haltebereich 48 entspricht. Da die Kontaktschalen 31 mit dem Haltebereich 48 in der Haltevorrichtung 42 der Hülse 37 gehalten sind, ist die Drehachse 43 auch in der Haltevorrichtung 42 angeordnet. Dazu sei angemerkt, dass die Drehachse 43 eigentlich als virtuelle Drehachse 43 zu betrachten ist, da diese die gegengleiche Wirkung der Kontaktschalen 31 verdeutlichen soll. Jede einzelne Kontaktschale 31 ist aufgrund der gegenüberliegenden Kontaktpunkte 47 entsprechend auch drehbar. Durch diese Drehachse 43 ist es nun möglich, die axiale Druckkraft 33 in die radiale Kontaktkraft 35 umzuwandeln. Im Detail erfolgt dies derart, dass die Druckkraft 33 auf die Erhöhung 46 der Stirnfläche 45 der Kontaktschale 31 ausgeübt wird. Dadurch, dass die Erhöhung 46 parallel zur Drehachse 43 angeordnet ist, werden die Kontaktbereiche 32 mit der definierten Kontaktkraft 35 gegeneinander bzw. gegen den dazwischen verlaufenden Schweißdraht 13 gedrückt. Es kann auch gesagt werden, dass die Druckkraft 33 links und rechts neben der Drehachse 43 - entsprechend auf der Erhöhung 46 jeder Kontaktschale 31 - ausgeübt wird. Dabei wirkt die Druckkraft 33 im Wesentlichen entsprechend in Richtung des Kontaktbereichs 32. Zur Umwandlung der axialen Druckkraft 33 in die radiale Kontaktkraft 35 ist die Drehachse 43 bevorzugt unterhalb der Erhöhung 46 angeordnet, sodass mit dem Hebelgesetz die Kontaktkraft 35 reguliert werden kann und die Beweglichkeit der Kontaktschalen 31 gegeben ist.

Die definierte Kontaktkraft 35 (beispielsweise 2N pro Kontaktschale 31) ergibt sich aus der Druckkraft 33 (beispielsweise 80N), dem Abstand zwischen Erhöhung 46 und Drehachse 43 (beispielsweise 1mm), der Länge der Kontaktschale 31 (beispielsweise 20mm) und der Gegenkraft 34 (beispielsweise 40N pro Kontaktpunkt 47). Die Gegenkraft wird dabei vom Winkel des konischen Übergangs auf den Haltebereich 48 beeinflusst, welcher korrespondierend auch in der Haltevorrichtung 42 der Hülse 37 ausgebildet ist. Die Kräfte werden insbesondere an den Durchmesser und das Material des Schweißdrahtes 13 angepasst bzw. abgestimmt.

Grundsätzlich sind alle Kräfte in erster Linie von der Drucckraft 33 abhängig. Zusätzlich ist die Kontaktkraft 35 aber auch vom Hebelgesetz, also das Verhältnis Abstand von Erhöhung 46 und Drehachse 43 zu dem Abstand zwischen Drehachse 43 und Ende des Kontaktbereichs 32 der Kontaktschale 31, abhängig. Diese Kräfte stellen sich ein, wenn die Hülse 37 mit den darin angeordneten Kontaktschalen 31 am Düsenstock 38 befestigt wird. Die Befestigung der Hülse 37 wird durch einen entsprechenden Anschlag am Düsenstock 38 definiert, sodass letztendlich die definierte Kontaktkraft 35 eingestellt ist. Bevorzugt wird die Druckkraft 33 durch den Druckmechanismus 36 nur punktuell auf die Erhöhungen 46 der Kontaktschalen 31 ausgeübt, sodass die Umwandlung der Kräfte über die Drehachse 43 erleichtert wird. Das heißt, dass der Druckbolzen 39 nicht vollflächig auf der Stirnfläche 45 der Kontaktschalen 31 anliegt, sondern punktuell. Damit sind die Kontaktschalen 31 beweglich in der Hülse 37 gehalten, auch wenn eine entsprechende Druckkraft 33 auf diese einwirkt.

Wenn also der Druckmechanismus 36 die Druckkraft 33 auf die Kontaktschalen 31 ausübt, sind diese im Kontaktbereich 32 aufgrund der aus der Druckkraft 33 resultierenden Kontaktkraft 35 zusammengedrückt bzw. geschlossen. Dabei hat der äußere Freiraum 49 seine maximale Höhe. Wird nun der Schweißdraht 13 durch die Kontaktschalen 31 gefördert, so werden die Kontaktschalen 31 im Kontaktbereich 32 im Wesentlichen normal zum Schweißdraht 13 auseinandergedrückt, sodass also die Kontaktkraft 35 über die Kontaktschalen 31 auf den Schweißdraht 13 wirkt. Dadurch wird der äußere Freiraum 49 reduziert. Trotz Einwirkung der Drucckraft 33 sind also erfindungsgemäß die als Verschleißteil ausgebildeten Kontaktschalen 31 beweglich in der Hülse 37 angeordnet. Diese Beweglichkeit wird insbesondere durch die kombinierte ovale und konvexe Stirnfläche 45 der Kontaktschalen 31 bewirkt. Die ovale Form wird durch die Kreissegmente und die konvexe Form durch die Erhöhung 46 gebildet. Die konvexe Fläche weist entlang der Drehachse 43 eine Vertiefung auf, welche bewirkt, dass sich die Drehachse 43 unterhalb der Erhöhungen 46 befindet, sodass die Umlenkung der axialen Druckkraft 33 auf die radiale Kontaktkraft 35 erleichtert wird.

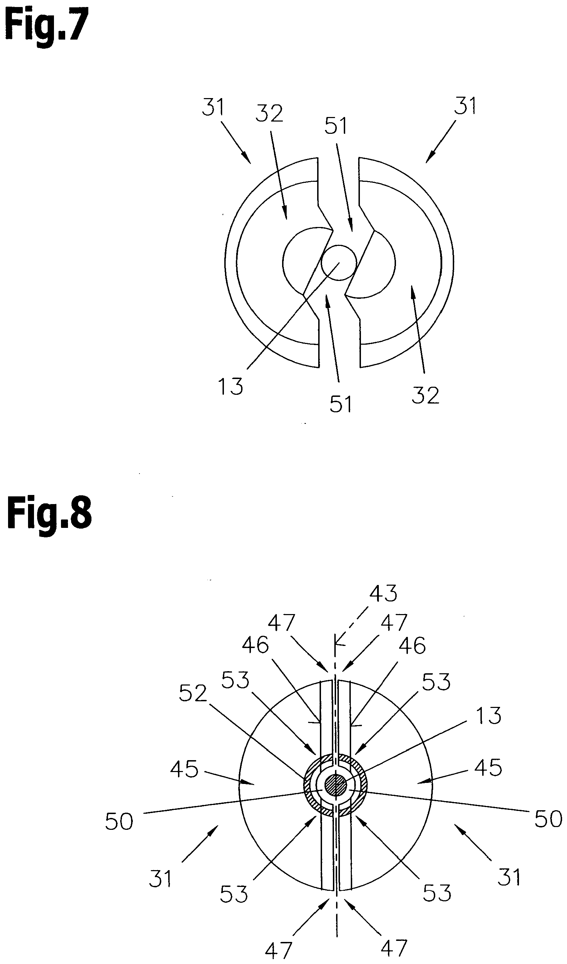

Die ovale Fläche ist aus der Draufsicht auf den Haltebereich 48 bzw. auf die Stirnfläche 45 der kombinierten Kontaktschalen 31 in Fig. 8 ersichtlich. Hieraus sind auch die Ausnehmungen 50 für den Schweißdraht 13 ersichtlich, welche einen Kreis bilden. Somit kann der Schweißdraht 13 im Wesentlichen im Zentrum der Kontaktschalen 31 geführt werden. Entsprechend wird der Schweißdraht 13 auch im Zentrum des Druckmechanismus 36, also durch die Fixierscheibe 41, die Druckfeder 40 und den Druckbolzen 39, geführt. Dementsprechend weist der bevorzugt zylinderförmige Druckbolzen 39 eine Stirnfläche auf, welche einem Kreisring 52 (schraffierter Bereich) entspricht. Dieser Kreisring 52 verläuft dabei um den durch die Ausnehmungen 50 gebildeten Kreis. Der Kreisring 52 bildet im Wesentlichen vier Druckpunkte 53 auf den Erhöhungen 46 der Kontaktschalen 31, auf welche die Druckkraft 33 punktuell ausgeübt wird. Über die Druckpunkte 53 wird zumindest ein Teil des Schweißstroms auf die Kontaktschalen 31 übertragen und auch die in den Kontaktschalen 31 erzeugte Wärme bei einem Schweißprozess abgeleitet. Der restliche Teil des Schweißstroms wird über die Hülse 37 und die Kontaktpunkte 47 auf die Kontaktschalen 31 übertragen. Über diesen Weg wird auch der restliche Teil der Wärme abgeleitet.

Eine weitere Grundvoraussetzung für eine stabile und konstante Kontaktierung ist die zentrische Führung des Schweißdrahtes 13. Realisiert wird dies durch ein Führungsrohr 54, welches sich durch den gesamten Druckmechanismus 36 und über die Ausnehmung 50 erstreckt. Somit wird der Schweißdraht 13 unabhängig von den Kontaktschalen 31 bis zum Kontaktbereich 32 geführt und im Kontaktbereich 32 kontaktiert.

Auch durch den verdrehten Kontaktbereich 32 der Kontaktschalen 31 ist eine Führung des Schweißdrahtes 13 gegeben. Der Schweißdraht 13 wird also nicht nur durch den Druck der Kontaktschalen 31 kontaktiert und geführt, sondern auch durch die schrägen Flächen 51 jeder Kontaktschale 31 seitlich geführt. Damit wird zum einen eine bessere Kontaktierung erreicht und zum anderen eine seitliche Führung. Diese seitliche Führung ist allerdings als Zusatz zu betrachten, da die Kontaktschalen 31 hauptsächlich die permanente Kontaktierung des Schweißdrahtes 13 gewährleisten sollen. Dies wirkt sich insbesondere auf den Werkstoffübergang und somit auf den gesamten Schweißprozess positiv aus, da der Schweißdraht 13 stets an derselben Stelle kontaktiert wird. Die wesentliche Führung des Schweißdrahtes 13 erfolgt durch das Führungsrohr 54 und die Hülse 37, in welcher eine Isolierbuchse 55 zur Führung angeordnet ist. Der Schweißdraht 13 tritt nach der Kontaktierung im Kontaktbereich 32 durch die Isolierbuchse 55 aus der Hülse 37 aus. Die Kontaktschalen 31 sind vollständig in der Hülse 37 angeordnet und somit auch vor Einflüssen des Schweißprozesses, wie Hitze und Schweißspritzer, wirkungsvoll geschützt.Die Isolierbuchse 55 ist dafür entsprechend hitzebeständig und verschleißfest ausgebildet, beispielsweise aus Siliziumnitrat. Das Führungsrohr 54 ist entsprechend auf den Durchmesser des Schweißdrahtes 13 bzw. auf einen Bereich von Durchmessern von Schweißdrähten 13 abgestimmt. Das Führungsrohr 54 kann auch leicht getauscht werden, da dieses lediglich von hinten in den Druckmechanismus 36 und die Kontaktschalen 31 gesteckt ist. Bevorzugt ist das Führungsrohr 54 auch für einen reibungsarmen Übergang des Schweißdrahtes 13 von der Versorgungsleitung 12 bzw. der Drahtseele ausgebildet.
Die Funktion des Führungsrohrs 54 kann auch der Druckbolzen 39 übernehmen, indem dessen Ausbildung mit dem Führungsrohr 54 kombiniert wird.

Allgemein sei noch erwähnt, dass die Druckkraft 33 mit der Fixierscheibe 41 eingestellt werden kann, sodass beispielsweise eine Abstimmung an das Material und den Durchmesser des Schweißdrahtes 13 möglich ist. Selbstverständlich können auch mit einer Kombination von Druckfeder 40 und Fixierscheibe 41 mehrere unterschiedliche Schweißdrähte 13 verwendet werden.

Für eine einfachere Handhabung ist bevorzugt vorgesehen, dass die Fixierscheibe 41 bis zu einem Anschlag geschraubt wird und die erforderliche Druckkraft 33 für die definierte Kontaktkraft 35 automatisch eingestellt ist.

Ebenso wird durch die erfindungsgemäße Konstruktion vorzugsweise das bekannte Ausschleifen der Kontaktbereiche 32 ausgeglichen. Bei Schwankungen des Schweißdrahtes 13, beispielsweise durch die Dressur, folgen die Kontaktschalen 31 dem Verlauf des Schweißdrahtes 13. Somit werden zusätzliche Kräfte im Kontaktbereich 32 vermieden bzw. zumindest reduziert, und die Kontaktkraft 35 bleibt im Wesentlichen konstant. Die auf den Schweißdraht 13 wirkende Kontaktkraft 35 wird im Wesentlichen automatisch nachjustiert, da gemäß der erfindungsgemäßen Kontaktiervorrichtung die Kontaktschalen 31 immer gegeneinander wirken. Dafür ist die bereits beschriebene Beweglichkeit der Kontaktschalen 31 ausschlaggebend.

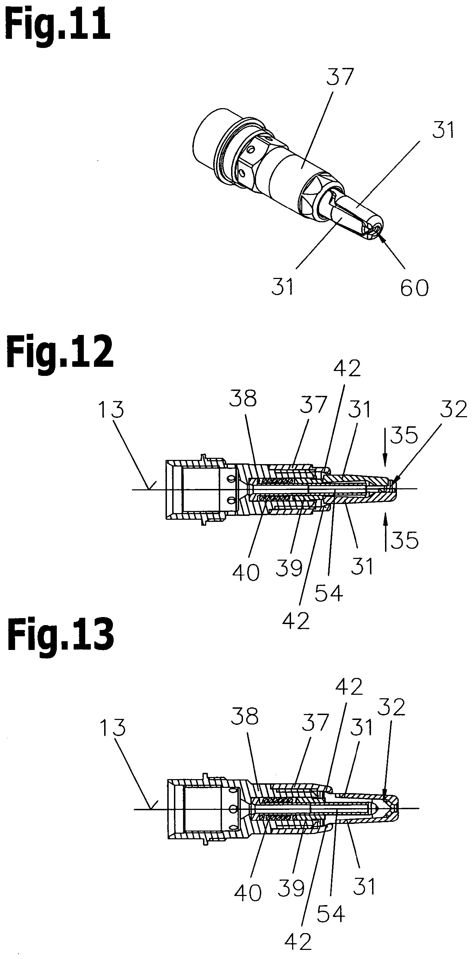

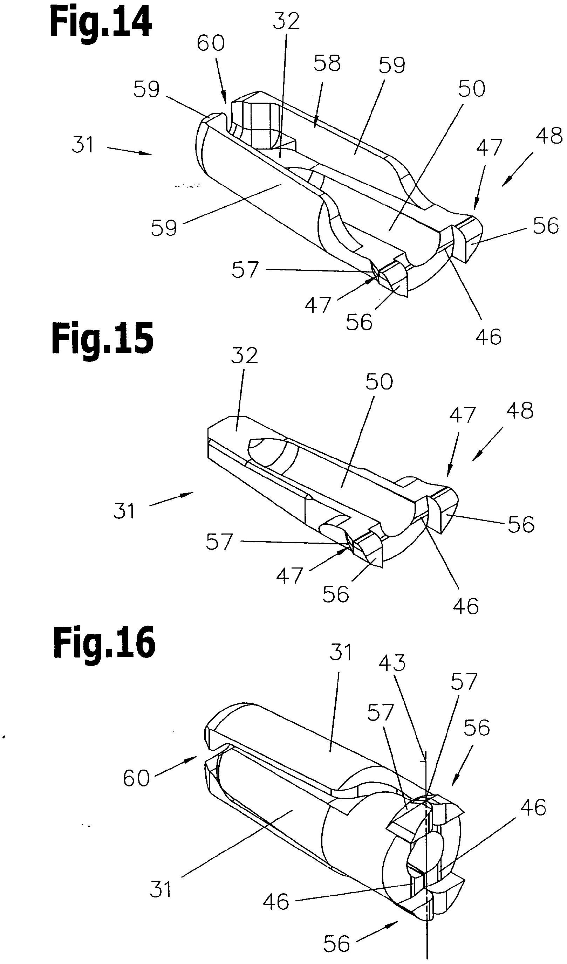

Die Figuren 11 bis 16 zeigen eine weitere Ausführungsform einer erfindungsgemäßen Kontaktiervorrichtung, bei der die Kontaktschalen 31 unterschiedlich aufgebaut sind. Ebenso wie bei der bereits beschriebenen Konstruktion der Kontaktiervorrichtung mit identisch aufgebauten Kontaktschalen 31 gemäß den Figuren 3 bis 10 müssen diese beweglich sein. Im Folgenden wird nur auf die Unterschiede zu der bereits beschriebenen Kontaktiervorrichtung mit identischen Kontaktschalen 31 eingegangen.

Die Beweglichkeit der beiden Kontaktschalen 31 wird durch den Haltebereich 48 ermöglicht, der durch zwei gegenüberliegende Vorsprünge 56 je Kontaktschale 31 gebildet wird, welche seitlich und oberhalb der Stirnfläche 45 vorspringen. Grundsätzlich sind die Vorsprünge 56 im Bereich der Innenfläche 44 der Kontaktschalen 31 angeordnet. Seitlich sind die Vorsprünge 56 jeweils über konische Fläche 57 mit der Außenfläche der Kontaktschale 31 verbunden, die sich in Richtung der Außenfläche der Kontaktschale 31 verjüngt. Es kann auch gesagt werden, dass die konische Fläche 57 verjüngend ausgebildet ist. Diese konischen Flächen 57 ermöglichen das bewegliche Halten der Kontaktschalen 31 in der Haltevorrichtung 42 der Hülse 37 und verhindert gleichzeitig das Herausfallen der Kontaktschalen 31, da die seitlichen Vorsprünge 56 vorstehen. Da die Stirnfläche 45 der Kontaktschale 31 im Wesentlichen die Form eines Kreissegments aufweist, ist entlang der Außenfläche der Kontaktschalen 31 genügend Freiraum zur Haltevorrichtung 42 vorhanden, sodass hier keine Reibung zwischen der Außenfläche der Kontaktschalen 31 und der Haltevorrichtung 42 auftritt. Des Weiteren weist beim Einsatz der Kontaktschalen 31 in dem Schweißbrenner, also in der Hülse 37, jeder Vorsprung 57 einen Kontaktpunkt 47 auf, welcher im Wesentlichen auf der konischen Fläche 57 angeordnet ist. Damit der Kontaktpunkt 47 durch die auf ihn wirkenden Kräfte nicht verformt und/oder verändert wird, sind die Vorsprünge 56 auch oberhalb der Stirnfläche 45 angeordnet und dienen im Wesentlichen zur Materialverstärkung. Durch die Verbindung der Kontaktpunkte 47 wird die Drehachse 43 gebildet, um welche sich die Kontaktschalen 31 bewegen. Zwischen den Vorsprüngen 56 ist die Erhöhung 46 angeordnet, auf welche der Druckbolzen 39 die Druckkraft 33 ausübt, wie dies anhand der Figuren 3 bis 10 bereits detailliert beschrieben wurde. Daraus resultiert, dass die Erhöhung 46 und die Drehachse 43 zwar parallel verlaufen, jedoch etwa in einer Ebene angeordnet sind. Somit wird die Reibung zwischen der Erhöhung 46 und dem Druckbolzen 39, welche aufgrund der Bewegung der Kontaktschalen 31 bei der Förderung des Schweißdrahts 13 entsteht, erheblich reduziert, da sich die Druckpunkte 53 bei Bewegung der Kontaktschalen 31 um die in etwa auf gleicher Ebene befindliche Drehachse 43 im Wesentlichen nicht verändern. Das heißt, dass sich die Stellung des Druckbolzens 39 im Wesentlichen nicht verändert, sodass dieser bei Bewegung der Kontaktschalen 31 gegen die Richtung der Kontaktkraft 35 nicht von der Erhöhung 46 gegen die Druckkraft 33 bewegt werden muss. Somit wird im Wesentlichen auch die Position der Erhöhung 46 bei der Bewegung der Kontaktschalen 31 nicht verändert. Die Bewegung der Kontaktschalen 31 ist einerseits beim Einfädeln des Schweißdrahts 13 erforderlich, indem die vorgespannten Kontaktschalen 31 gegen die Kontaktkraft 35 bewegt werden und die Kontaktkraft 35 entsprechend auf den Schweißdraht 13 wirkt, andererseits werden durch die Bewegungen der Kontaktschalen 31 Verformungen (Dressur) des geförderten Schweißdrahts 13 ausgeglichen.

Durch Veränderung der Distanz zwischen der parallel verlaufenden Drehachse 43 und Erhöhung 46 kann weiters über das Hebelgesetz die Kontaktkraft 35 eingestellt werden, indem andere Kontaktschalen 31 verwendet werden. Aus der Druckkraft 33 resultiert die Kontaktkraft 35 im Kontaktbereich 32, welcher durch die unterschiedlich aufgebauten Kontaktschalen 31 unterschiedlich positioniert ist. Dies resultiert daraus, da die Kontaktschalen 31 unterschiedlich lang sind, wobei die kürzere Kontaktschale 31 durch die längere Kontaktschale 31 geschützt ist. Das heißt, dass der für die Beweglichkeit erforderliche Spalt zwischen den Kontaktschalen 31 vor Schweißspritzern geschützt wird und somit die Beweglichkeit und Funktion der Kontaktschalen 31 nicht beeinträchtigt wird. Daher ist es auch ausreichend, wenn die Hülse 37 im Wesentlichen den Haltebereich 48 aufnimmt und nicht, wie gemäß den Fig. 1 bis 10 beschrieben, die gesamten Kontaktschalen 31 umhüllt bzw. umschließt.

Konstruktiv ist dieser Schutz beispielsweise derart gelöst, dass im Wesentlichen die längere Kontaktschale 31 die kürzere Kontaktschale 31 aufnimmt. Die längere Kontaktschale 31 weist somit eine Ausnehmung 58 auf, welche die kürzere Kontaktschale 31 aufnimmt. Diese Ausnehmung 58 wird im Wesentlichen derart gebildet, dass seitlich und stirnseitig - also am Austrittsende des Schweißdrahts 13 - Wände 59 angeordnet sind, welche die Ausnehmung 58 entsprechend begrenzen. Somit ist der Spalt zwischen den Kontaktschalen 31 in der Ausnehmung 58 vor Schweißspritzern, Schmutz und dergleichen geschützt. Die Tiefe der Ausnehmung 58 reicht bis zur Ebene, in welcher der Schweißdraht 13 geführt ist. In der stirnseitigen Wand 59 der länger ausgebildeten Kontaktschale 31 ist eine Öffnung 60 für den Schweißdraht 13 angeordnet. Der Kontaktbereich 32 in der längeren Kontaktschale 31 ist vor dieser Öffnung 60 angeordnet, wodurch der Kontaktbereich 32 über die stirnseitig verlaufende Wand mit der Öffnung 60 geschützt wird. Der Kontaktbereich 32 der kürzeren Kontaktschale 31 ist dementsprechend ganz vorne angeordnet.

Somit sind die Kontaktschalen 31 im Haltebereich 48 gleich ausgebildet, jedoch im Bereich nach dem Haltebereich 48 bis einschließlich dem Kontaktbereich 32 unterschiedlich geformt. So ist die Breite dieses Bereichs bei der kürzeren Kontaktschale 31, die in die Ausnehmung 58 der längeren Kontaktschale 31 eingreift, im Wesentlichen gleich der Breite des Kontaktbereichs 32. Somit ist nach der konischen Fläche 57 ein zusätzlicher Übergang vom Haltebereich 48 auf diesen Bereich angeordnet, sodass die kürzere Kontaktschale 31 im Wesentlichen mit drei unterschiedlichen Breiten ausgeführt ist. Hingegen ist bei der längeren Kontaktschale 31 die Breite der Ausnehmung 58 im Wesentlichen gleich der Breite des Kontaktbereichs 32. Die längere Kontaktschale 32 ist hingegen auch mit zwei unterschiedlichen Breiten ausgeführt. Dementsprechend enden auch die seitlichen Wände 59 der Ausnehmung 58 vor dem Haltebereich 48.

Die Öffnung 60 der stirnseitigen Wand 59 kann auch als Nut ausgebildet sein, sodass die Öffnung 60 unabhängig vom Durchmesser des Schweißdrahts 13 ist.

## Patentansprüche

1. Kontaktrohr (29) gebildet aus zwei Kontaktschalen (31) zur Kontaktierung eines Schweißdrahtes (13) in einem Schweißbrenner (10), wobei jede Kontaktschale (31) im Austrittsbereich für den Schweißdraht (13) einen Kontaktbereich (32) zur Kontaktierung des Schweißdrahts (13) mit einer radialen Kontaktkraft (35) und einen gegenüberliegenden, im Eintrittsbereich für den Schweißdraht (13) angeordneten Haltebereich (48) mit einer Stirnfläche (45) zur Befestigung im Schweißbrenner (10) aufweist, **dadurch gekennzeichnet, dass** an der Stirnfläche (45) des Haltebereichs (48) jeder Kontaktschale (31) zwei gegenüberliegende Kontaktpunkte (47) zur Kontaktierung mit einer Haltevorrichtung (42) einer die Kontaktschalen (31) umgebenden Hülse (37) und Gewährleistung einer freien Beweglichkeit der Kontaktschalen (31) in der Hülse (37) angeordnet sind, wobei die Verbindung der Kontaktpunkte (47) eine Drehachse (43) im Haltebereich (48) darstellt, um welche die Kontaktschalen (31) beweglich angeordnet sind, an der Stirnfläche (45) des Haltebereichs (48) jeder Kontaktschale (31) eine parallel zur Drehachse (43) angeordnete Erhöhung (46) ausgebildet ist, wobei die Drehachse (43) unterhalb der Erhöhung (46) angeordnet ist, sodass über die Erhöhungen (46) eine axiale Druckkraft (33) aufbringbar ist, zur Erzielung einer Bewegung der Kontaktschalen (31) um die Drehachse (43) und die Umwandlung der axialen Druckkraft (33) in die radiale Kontaktkraft (35) im Kontaktbereich (32).

2. Kontaktrohr (29) nach Anspruch 1, **dadurch gekennzeichnet, dass** der Kontaktbereich (32) jeder Kontaktschale (31) verdreht ausgebildet ist und zu einer Innenfläche (44) in einem Winkel schräg versetzte Flächen (51) zur Kontaktierung des Schweißdrahtes (13) aufweist.

3. Kontaktrohr (29) nach Anspruch 2, **dadurch gekennzeichnet, dass** die Stirnfläche (45) die Form eines Kreissegments aufweist, wobei die Erhöhung (46) parallel zu einer Kreissehne des Kreissegments angeordnet ist.

4. Kontaktrohr (29) nach Anspruch 2 oder 3, **dadurch gekennzeichnet, dass** zwei durch die Erhöhung (46) getrennte Abschnitte in der Stirnfläche (45) angeordnet sind, welche von der Erhöhung (46) schräg abfallend ausgebildet sind.

5. Kontaktrohr (29) nach einem der Ansprüche 2 bis 4, **dadurch gekennzeichnet, dass** in einer Innenfläche (44) eine Ausnehmung (50) vom Haltebereich (48) bis zum Kontaktbereich (32) zur im Wesentlichen freilaufenden Bewegung des Schweißdrahtes (13) angeordnet ist.

6. Kontaktrohr (29) nach einem der Ansprüche 2 bis 5, **dadurch gekennzeichnet, dass** die Stirnfläche (45) oval und im Wesentlichen konvex ausgebildet ist.

7. Kontaktrohr (29) nach Anspruch 1, **dadurch gekennzeichnet, dass** bei einer ersten Kontaktschale (31) eine Ausnehmung (58) vom Kontaktbereich (32) zum Haltebereich (48) zur Aufnahme der zweiten Kontaktschale (31) angeordnet ist, welche seitlich und stirnseitig von Wänden (59) begrenzt ist und sich bis in eine Ebene zur Führung des Schweißdrahtes (13) erstreckt, wobei in der stirnseitig verlaufenden Wand (59) eine Öffnung (60) für den Schweißdraht (13) angeordnet ist, und dass die Breite der zweiten Kontaktschale (31) im Wesentlichen der Breite des Kontaktbereichs (32) der ersten Kontaktschale (31) entspricht und zur Aufnahme in einer Ausnehmung (58) der ersten Kontaktschale (31) ausgebildet ist.

8. Kontaktrohr (29) nach Anspruch 7, **dadurch gekennzeichnet, dass** die stirnseitige Wand (59) der ersten Kontaktschale (31) vor dem Kontaktbereich (32) angeordnet ist.

9. Kontaktrohr (29) nach Anspruch 7 oder 8, **dadurch gekennzeichnet, dass** die seitlichen Wände (59) der ersten Kontaktschale (31) im Wesentlichen bis vor den Haltebereich (48) angeordnet sind.

10. Kontaktrohr (29) nach einem der Ansprüche 7 bis 9, **dadurch gekennzeichnet, dass** bei den Kontaktschalen (31) in einer Ebene zur Führung des Schweißdrahtes (10) eine halbkreisförmige Ausnehmung (50) zur Aufnahme eines Führungsrohres (54) angeordnet ist, wobei im zusammengebauten Zustand im Wesentlichen eine Bohrung ausgebildet wird.

11. Kontaktrohr (29) nach einem der Ansprüche 7 bis 10, **dadurch gekennzeichnet, dass** an der Stirnfläche (45) zumindest zwei gegenüberliegende Vorsprünge (56) zur Bildung der Drehachse (43) angeordnet sind, und zwischen den Vorsprüngen (56) die Erhöhung (46) angeordnet ist, wobei die Erhöhung (46) und die Drehachse (43) etwa auf einer Ebene angeordnet sind.

12. Kontaktrohr (29) nach Anspruch 11, **dadurch gekennzeichnet, dass** eine Fläche (57) des Vorsprungs (56) in Richtung der Außenfläche jeder Kontaktschale (31), insbesondere in Richtung des Kontaktbereichs (32), verjüngend ausgebildet ist.

13. Vorrichtung zur Kontaktierung eines Schweißdrahtes (13) in einem Schweißbrenner (10) mit einem Kontaktrohr (29) mit zwei in einer Hülse (37) frei beweglich angeordneten Kontaktschalen (31) nach einem der Ansprüche 1 bis 12, wobei die Hülse (37) an einem Düsenstock (38) mit integriertem Druckmechanismus (36) befestigt ist, **dadurch gekennzeichnet, dass** an der Stirnfläche (45) jeder Kontaktschale (31) zwei gegenüberliegende Kontaktpunkte (47) zur Kontaktierung mit einer Haltevorrichtung (42) der Hülse (37) und Gewährleistung einer Beweglichkeit der Kontaktschalen (31) in der Hülse (37) angeordnet sind, wobei die Verbindung der Kontaktpunkte (47) eine Drehachse (43) im Haltebereich (48) darstellt, um welche die Kontaktschalen (31) beweglich angeordnet sind, an der Stirnfläche (45) jeder Kontaktschale (31) eine parallel zur Drehachse (43) angeordnete Erhöhung (46) zum Aufbringen einer axialen Druckkraft (33) durch den Druckmechanismus (36) ausgebildet ist, wobei die Drehachse (43) unterhalb der Erhöhung (46) angeordnet ist, und die Hülse (37) eine Haltevorrichtung (42) zur Ausübung einer Gegenkraft (34) auf die Kontaktschalen (31) aufweist, sodass die axiale Druckkraft (33) über die von der Haltevorrichtung (42) auf die Kontaktschalen (31) ausgeübte Gegenkraft (34) in die radial einwirkende Kontaktkraft (35) umwandelbar ist.

14. Vorrichtung nach Anspruch 13, **dadurch gekennzeichnet, dass** eine Einrichtung zur Führung des Schweißdrahtes (13) vor und nach dem Kontaktbereich (32) vorgesehen ist.

15. Vorrichtung nach Anspruch 13 oder 14, **dadurch gekennzeichnet, dass** die Kontaktschalen (31) im Kontaktbereich (32) über die Kontaktkraft (35) im Wesentlichen normal zum Schweißdraht (13) bewegbar sind.

16. Vorrichtung nach einem der Ansprüche 13 bis 15, **dadurch gekennzeichnet, dass** der Haltebereich (48) jeder Kontaktschale (31) gegenüber der weiteren Kontaktschale (31) verbreitert ausgebildet ist, und der Übergang auf die Verbreiterung konisch ausgebildet ist.

17. Vorrichtung nach einem der Ansprüche 13 bis 16, **dadurch gekennzeichnet, dass** die Hülse (37) im Wesentlichen eine zu den Kontaktschalen (31) korrespondierende Ausnehmung aufweist.

18. Vorrichtung nach einem der Ansprüche 13 bis 17, **dadurch gekennzeichnet, dass** in der Hülse (37) eine Isolierbuchse (55) zur Führung des Schweißdrahtes (13) vorgesehen ist.

19. Vorrichtung nach einem der Ansprüche 13 bis 18, **dadurch gekennzeichnet, dass** im Zentrum des Druckmechanismus (36) und einem Teil der Kontaktschalen (31) ein Führungsrohr (54) für den Schweißdraht (13) angeordnet ist.

20. Vorrichtung nach einem der Ansprüche 13 bis 19, **dadurch gekennzeichnet, dass** der Druckmechanismus (36) zumindest aus einem Druckbolzen (39), einer Druckfeder (40) und einer Fixierscheibe (41) gebildet ist, wobei der Druckbolzen (39) im Wesentlichen entlang der Achse des Schweißdrahtes (13) bewegbar ist.

21. Verfahren zur Kontaktierung eines Schweißdrahtes (13) in einem Schweißbrenner (10), wobei der Schweißdraht (13) in einem Kontaktbereich (32) zumindest zweier mit jeweils einem im Austrittsbereich für den Schweißdraht (13) angeordneten Kontaktbereich (32) zur Kontaktierung des Schweißdrahtes (13) mit einer radialen Kontaktkraft (35), und jeweils einem, dem Kontaktbereich (32) gegenüberliegenden, im Eintrittsbereich für den Schweißdraht (13) angeordneten Haltebereich (48) mit jeweils einer Stirnfläche (45) ausgebildeten Kontaktschalen (31) kontaktiert wird, **dadurch gekennzeichnet, dass** jede Kontaktschale (31) über zwei gegenüberliegende Kontaktpunkte (47) an der Stirnfläche (45) mit einer Hülse (37) kontaktiert wird, und auf eine zu einer die Kontaktpunkte (47) verbindenden Drehachse (43) parallele Erhöhung (46) an der Stirnfläche (45) eines dem Kontaktbereich (32) jeder Kontaktschale (31) gegenüberliegenden Haltebereichs (48) eine Druckkraft (33) in axialer Richtung ausgeübt wird, die Kontaktschalen (31) gegen eine Haltevorrichtung (42) der Hülse (37) zur Erzeugung einer Gegenkraft (34) gedrückt werden, wobei in der Haltevorrichtung (42) die Druckkraft (33) in eine radiale Kontaktkraft (35) umgewandelt wird.

22. Verfahren nach Anspruch 21, **dadurch gekennzeichnet, dass** die axiale Druckkraft (33) auf jeder Kontaktschale (31) punktuell und parallel der Drehachse (43) ausgeübt wird.

23. Verfahren nach Anspruch 21 oder 22, **gekennzeichnet durch** eine Anwendung bei einer Vorrichtung gemäß den Ansprüchen 13 bis 20 mit einem Kontaktrohr (29) gemäß den Ansprüchen 1 bis 12.

## Claims

1. Contact tube (29) formed from two contact shells (31) for contacting a welding wire (13) in a welding torch (10), each contact shell (31) comprising a contact region (32), in the exit region for the welding wire (13), which contact region is intended for contacting the welding wire (13) at a radial contact force (35), and an opposite holding region (48), arranged in the entry region for the welding wire (13), which holding region has an end face (45) for fastening in the welding torch (10), **characterised in that** two opposing contact points (47) for contacting a holding device (42) of a sleeve (37) surrounding the contact shells (31) and for ensuring that the contact shells (31) can move freely in the sleeve (37) are arranged on the end face (45) of the holding region (48) of each contact shell (31), the connection between the contact points (47) representing an axis of rotation (43) in the holding region (48), about which axis the contact shells (31) are movably arranged, a raised part (46) arranged parallel to the axis of rotation (43) being arranged on the end face (45) of the holding region (48) of each contact shell (31), the axis of rotation (43) being arranged below the raised part (46) such that an axial compressive force (33) can be applied over the raised parts (46), in order to move the contact shells (31) about the axis of rotation (43) and to convert the axial compressive force (33) into the radial contact force (35) in the contact region (32).

2. Contact tube (29) according to claim 1, **characterised in that** the contact region (32) of each contact shell (31) is twisted and has surfaces (51) for contacting the welding wire (13) that are obliquely offset at an angle with respect to an inner surface (44).

3. Contact tube (29) according to claim 2, **characterised in that** the end face (45) is in the shape of a circular segment, the raised part (46) being arranged parallel to a chord of the circular segment.

4. Contact tube (29) according to either claim 2 or claim 3, **characterised in that** two portions separated by the raised part (46) are arranged in the end face (45), which portions slope obliquely downwards from the raised part (46).

5. Contact tube (29) according to any of claims 2 to 4, **characterised in that** a recess (50) from the holding region (48) to the contact region (32) is arranged in the inner surface (44), which recess is intended for the substantially free-running movement of the welding wire (13).

6. Contact tube (29) according to any of claims 2 to 5, **characterised in that** the end face (45) is oval and substantially convex.

7. Contact tube (29) according to claim 1, **characterised in that**, in a first contact shell (31), a recess (58) is arranged from the contact region (32) to the holding region (48) for receiving the second contact shell (31), which recess is delimited laterally and on the end face by walls (59) and extends up to a plane for guiding the welding wire (13), an opening (60) for the welding wire (13) being arranged in the end-face wall (59), and **in that** the width of the second contact shell (31) substantially corresponds to the width of the contact region (32) of the first contact shell (31) and is designed to be received in a recess (58) in the first contact shell (31).

8. Contact tube (29) according to claim 7, **characterised in that** the end-face wall (59) of the first contact shell (31) is arranged upstream of the contact region (32).

9. Contact tube (29) according to either claim 7 or claim 8, **characterised in that** the lateral walls (59) of the first contact shell (31) are arranged substantially up to in front of the holding region (48).

10. Contact tube (29) according to any of claims 7 to 9, **characterised in that**, in the contact shells (31), a semicircular recess (50) for receiving a guide tube (54) is arranged in a plane for guiding the welding wire (10), a bore substantially being formed when in the assembled state.

11. Contact tube (29) according to any of claims 7 to 10, **characterised in that** at least two opposing projections (56) for forming the axis of rotation (43) are arranged on the end face (45), and the raised part (46) is arranged between the projections (56), the raised part (46) and the axis of rotation (43) being arranged approximately on one plane.

12. Contact tube (29) according to claim 11, **characterised in that** a surface (57) of the projection (56) is designed to taper in the direction of the outer surface of each contact shell (31), in particular in the direction of the contact region (32).

13. Device for contacting a welding wire (13) in a welding torch (10), comprising a contact tube (29) according to any of claims 1 to 12 comprising two contact shells (31) arranged so as to be freely movable in a sleeve (37), the sleeve (37) being fastened to a nozzle assembly (38) comprising an integrated pressure mechanism (36), **characterised in that** two opposing contact points (47) for contacting a holding device (42) of the sleeve (37) and for ensuring that the contact shells (31) can move in the sleeve (37) are arranged on the end face (45) of each contact shell (31), the connection between the contact points (47) representing an axis of rotation (43) in the holding region (48), about which axis the contact shells (31) are movably arranged, a raised part (46) arranged parallel to the axis of rotation (43) being formed on the end face (45) of each contact shell (31) in order to apply an axial compressive force (33) via the pressure mechanism (36), the axis of rotation (43) being arranged below the raised part (46), and the sleeve (37) comprising a holding device (42) for exerting a counter force (34) onto the contact shells (31), such that the axial compressive force (33) can be converted, via the counter force (34) exerted by the holding device (42) onto the contact shells (31), into the radially acting contact force (35).

14. Device according to claim 13, **characterised in that** a means for guiding the welding wire (13) is provided upstream and downstream of the contact region (32).

15. Device according to either claim 13 or claim 14, **characterised in that**, in the contact region (32), the contact shells (31) can be moved substantially normally to the welding wire (13) by means of the contact force (35).

16. Device according to any of claims 13 to 15, **characterised in that** the holding region (48) of each contact shell (31) is designed to be widened with respect to the further contact shell (31), and the transition to the widened portion is conical.

17. Device according to any of claims 13 to 16, **characterised in that** the sleeve (37) substantially comprises a recess corresponding to the contact shells (31).

18. Device according to any of claims 13 to 17, **characterised in that** an insulating bushing (55) for guiding the welding wire (13) is provided in the sleeve (37).

19. Device according to any of claims 13 to 18, **characterised in that** a guide tube (54) for the welding wire (13) is arranged in the centre of the pressure mechanism (36) and in a part of the contact shells (31).

20. Device according to any of claims 13 to 19, **characterised in that** the pressure mechanism (36) is formed at least from a pressure bolt (39), a compression spring (40) and a fixing disc (41), the pressure bolt (39) being movable substantially along the axis of the welding wire (13).

21. Method for contacting a welding wire (13) in a welding torch (10), the welding wire (13) being contacted, in a contact region (32), by at least two contact shells (31) each formed having a contact region (32), arranged in the exit region for the welding wire (13), which contact region is intended for contacting the welding wire (13) at a radial contact force (35), and having a holding region (48), opposite the contact region (32) and arranged in the entry region for the welding wire (13), which holding region has an end face (45) in each case, **characterised in that** each contact shell (31) is contacted by a sleeve (37) via two opposing contact points (47) on the end face (45), and a compressive force (33) is exerted in the axial direction onto a raised part (46), which is parallel to an axis of rotation (43) connecting the contact points (47), on the end face (45) of a holding region (48) opposite the contact region (32) of each contact shell (31), which contact shells (31) are pressed against a holding device (42) of the sleeve (37) in order to generate a counter force (34), the compressive force (33) being converted into a radial contact force (35) in the holding device (42).

22. Method according to claim 21, **characterised in that** the axial compressive force (33) is exerted on each contact shell (31) at a point and parallel to the axis of rotation (43).

23. Method according to either claim 21 or claim 22, **characterised by** use in a device according to claims 13 to 20 comprising a contact tube (29) according to claims 1 to 12.

## Revendications

1. Tube de contact (29) formé de deux enveloppes de contact (31) pour la mise en contact d'un fil à souder (13) dans un chalumeau à souder (10), dans lequel chaque enveloppe de contact (31) présente, dans la zone de sortie pour le fil à souder (13), une zone de contact (32) pour la mise en contact du fil à souder (13) avec une force de contact (35) radiale et une zone de retenue (48) opposée, agencée dans la zone d'entrée pour le fil à souder (13), avec une surface frontale (45) pour la fixation dans le chalumeau à souder (10), **caractérisé en ce que** contre la surface frontale (45) de la zone de retenue (48) de chaque enveloppe de contact (31) sont agencés deux points de contact (47) opposés pour la mise en contact avec un dispositif de retenue (42) d'une douille (37) entourant les enveloppes de contact (31) et la garantie d'une mobilité libre des enveloppes de contact (31) dans la douille (37), dans lequel le raccordement des points de contact (47) représente un axe de rotation (43) dans la zone de retenue (48) autour duquel les enveloppes de contact (31) sont agencées de façon mobile, contre la surface frontale (45) de la zone de retenue (48) de chaque enveloppe de contact (31) est conçue une surélévation (46) agencée parallèlement à l'axe de rotation (43), dans lequel l'axe de rotation (43) est agencé en-dessous de la surélévation (46), de sorte qu'une force de pression (33) axiale puisse être appliquée par-dessus la surélévation (46) pour obtenir un mouvement des enveloppes de contact (31) autour de l'axe de rotation (43) et la transformation de la force de pression (33) axiale en la force de contact (35) radiale dans la zone de contact (32).

2. Tube de contact (29) selon la revendication 1, **caractérisé en ce que** la zone de contact (32) de chaque enveloppe de contact (31) est conçue de façon tordue et présente vers une surface intérieure (44) des surfaces (51) décalées à l'oblique selon un angle pour la mise en contact du fil à souder (13).

3. Tube de contact (29) selon la revendication 2, **caractérisé en ce que** la surface frontale (45) présente la forme d'un segment circulaire, dans lequel la surélévation (46) est agencée parallèlement à une corde circulaire du segment circulaire.

4. Tube de contact (29) selon la revendication 2 ou 3, **caractérisé en ce que** deux sections séparées par la surélévation (46) sont agencées dans la surface frontale (45), lesquelles sont conçues pour tomber en biais depuis la surélévation (46).

5. Tube de contact (29) selon l'une des revendications 2 à 4, **caractérisé en ce que** dans une surface intérieure (44) est agencé un évidement (50) depuis la zone de retenue (48) jusqu'à la zone de contact (32) pour le mouvement essentiellement libre du fil à souder (13).

6. Tube de contact (29) selon l'une des revendications 2 à 5, **caractérisé en ce que** la surface frontale (45) est conçue de façons ovale et essentiellement convexe.

7. Tube de contact (29) selon la revendication 1, **caractérisé en ce que** dans le cas d'une première enveloppe de contact (31) est agencé un évidement (58) depuis la zone de contact (32) jusqu'à la zone de retenue (48) pour le logement de la seconde enveloppe de contact (31), laquelle est délimitée latéralement et frontalement par des parois (59) et s'étend jusque dans un plan pour le guidage du fil à souder (13), dans lequel dans la paroi (59) se déroulant frontalement est agencée une ouverture (60) pour le fil à souder (13), et **en ce que** la largeur de la seconde enveloppe de contact (31) correspond pour l'essentiel à la largeur de la zone de contact (32) de la première enveloppe de contact (31) et est conçue pour le logement dans un évidement (58) de la première enveloppe de contact (31).

8. Tube de contact (29) selon la revendication 7, **caractérisé en ce que** la paroi (59) frontale de la première enveloppe de contact (31) est agencée avant la zone de contact (32).

9. Tube de contact (29) selon la revendication 7 ou 8, **caractérisé en ce que** les parois (59) latérales de la première enveloppe de contact (31) sont agencées pour l'essentiel jusqu'avant la zone de retenue (48).

10. Tube de contact (29) selon l'une des revendications 7 à 9, **caractérisé en ce que** dans les enveloppes de contact (31) dans un plan pour le guidage du fil à souder (13) un évidement (50) semi-circulaire est agencé pour le logement d'un tube de guidage (54), dans lequel à l'état monté un alésage est conçu pour l'essentiel.

11. Tube de contact (29) selon l'une des revendications 7 à 10, **caractérisé en ce que** contre la surface frontale (45) sont agencées au moins deux saillies (56) opposées pour la formation de l'axe de rotation (43), et entre les saillies (56) est agencée la surélévation (46), dans lequel la surélévation (46) et l'axe de rotation (43) sont agencés à peu près sur un plan.

12. Tube de contact (29) selon la revendication 11, **caractérisé en ce qu'**une surface (57) de la saillie (56) est conçue en se rétrécissant en direction de la surface extérieure de chaque enveloppe de contact (31), en particulier en direction de la zone de contact (32).

13. Dispositif pour la mise en contact d'un fil à souder (13) dans un chalumeau à souder (10) avec un tube de contact (29) avec deux enveloppes de contact (31) agencées en mobilité libre dans une douille (37) selon l'une des revendications 1 à 12, dans lequel la douille (37) est fixée contre un raccord de buse (38) avec un mécanisme de pression (36) intégré, **caractérisé en ce que** contre la surface frontale (45) de chaque enveloppe de contact (31) sont agencés deux points de contact (47) opposés pour la mise en contact avec un dispositif de retenue (42) de la douille (37) et la garantie d'une mobilité des enveloppes de contact (31) dans la douille (37), dans lequel le raccordement des points de contact (47) représente un axe de rotation (43) dans la zone de retenue (48) autour duquel les enveloppes de contact (31) sont agencées de façon mobile, contre la surface frontale (45) de chaque enveloppe de contact (31) est conçue une surélévation (46) agencée parallèlement à l'axe de rotation (43) pour l'application d'une force de pression (33) axiale par le mécanisme de pression (36), dans lequel l'axe de rotation (43) est agencé en-dessous de la surélévation (46), et la douille (37) présente un dispositif de retenue (42) pour l'exercice d'une contre-force (34) sur les enveloppes de contact (31), de sorte que la force de pression (33) puisse être convertie en la force de contact (35) agissant radialement via la contre-force (34) exercée par le dispositif de retenue (42) sur les enveloppes de contact (31).

14. Dispositif selon la revendication 13, **caractérisé en ce qu'**un équipement est prévu pour le guidage du fil à souder (13) avant et après la zone de contact (32).

15. Dispositif selon la revendication 13 ou 14, **caractérisé en ce que** les enveloppes de contact (31) peuvent être déplacées, via la force de contact (35), pour l'essentiel perpendiculairement au fil à souder (13).

16. Dispositif selon l'une des revendications 13 à 15, **caractérisé en ce que** la zone de retenue (48) de chaque enveloppe de contact (31) est conçue élargie par rapport à l'autre enveloppe de contact (31), et la transition vers l'élargissement est conçue de façon conique.

17. Dispositif selon l'une des revendications 13 à 16, **caractérisé en ce que** la douille (37) présente un évidement correspondant pour l'essentiel aux enveloppes de contact (31).

18. Dispositif selon l'une des revendications 13 à 17, **caractérisé en ce qu'**un manchon d'isolation (55) est prévu dans la douille (37) pour le guidage du fil à souder (13).

19. Dispositif selon l'une des revendications 13 à 18, **caractérisé en ce qu'**un tube de guidage (54) pour le fil à souder (13) est agencé au centre du mécanisme de pression (36) et dans une partie des enveloppes de contact (31).

20. Dispositif selon l'une des revendications 13 à 19, **caractérisé en ce que** le mécanisme de pression (36) est formé d'au moins un boulon de pression (39), un ressort de pression (40) et un disque de fixation (41), dans lequel le boulon de pression (39) peut pour l'essentiel être déplacé le long de l'axe du fil à souder (13).

21. Procédé pour la mise en contact d'un fil à souder (13) dans un chalumeau à souder (10), dans lequel le fil à souder (13) est mis en contact dans une zone de contact (32) d'au moins deux enveloppes de contact (31) respectivement formées d'une surface frontale (45) avec respectivement une zone de contact (32) agencée dans la zone de sortie pour le fil à souder (13) pour la mise en contact du fil à souder (13) avec une force de contact (35) radiale, et respectivement une zone de retenue (48) agencée dans la zone d'entrée pour le fil à souder (13) et opposée à la zone de contact (32), **caractérisé en ce que** chaque enveloppe de contact (31) est mise en contact avec une douille (37) via deux points de contact (47) opposés contre la surface frontale (45), et une force de pression (33) est exercée en direction axiale sur une surélévation (46) parallèle à un axe de rotation (43) reliant les points de contact (47) contre la surface frontale (45) d'une zone de retenue (48) opposée à la zone de contact (32) de chaque enveloppe de contact (31), les enveloppes de contact (31) sont appuyées contre un dispositif de retenue (42) de la douille (37) pour la production d'une contre-force (34), dans lequel la force de pression (33) est convertie en une force de contact (35) radiale dans le dispositif de retenue (42).

22. Procédé selon la revendication 21, **caractérisé en ce que** la force de pression (33) axiale est exercée sur chaque enveloppe de contact (31) ponctuellement et parallèlement à l'axe de rotation (43).

23. Procédé selon la revendication 21 ou 22, **caractérisé par** une utilisation dans le cadre d'un dispositif selon les revendications 13 à 20 avec un tube de contact (29) selon les revendications 1 à 12.
